# EUROPEAN PATENT APPLICATION

(11) **EP 3 852 005 A1**
(43) Date of publication of application: **21.07.2021**
(21) Application number: 20152251.3
(22) Date of filing: 16.01.2020
(51) Int. Cl.: G06K 9/00, G06K 9/20, G06K 9/46, G06K 9/62

(54) **METHOD AND SYSTEM FOR SMILE DETECTION USING ARTIFICIAL INTELLIGENCE**

(71) Applicant: Deutsche Telekom AG, 53113 Bonn (DE)
(72) Inventor: KETABDAR, Hamed, 10707 Berlin (DE)
(74) Representative: Vossius & Partner Patentanwälte Rechtsanwälte mbB

(57) **Abstract**

A method and system for detecting a smile and providing a feedback to a user. The method comprises the steps of: capturing a images of the user with at least two different sensors over a predetermined period of time; detecting a face in the captured images and marking a contour for the area of the image that belongs to the face; labeling based on a output of a convolutional neural network, CNN, the captured images of a face based on an facial expression of the user, wherein the CNN generates two outputs: a probability value for a smile and a probability value for a no-smile; and outputting a feedback to the user based on a predetermined threshold for the label and the predetermined time.

## Description

The invention relates to a method and system to provide audio and/or visual feedback based on a face expression.

Happiness is commonly agreed to be what everybody is searching for in life. Yet reaching happiness does not seem to be a simple mission. This invention provides a system, which, supported by advances in artificial intelligence technology, assists users to improve their happiness level.

One of the key indicators of someone's happy mood is smiling. Humans smile when they are happy. However, it is proved that reverse is also true: posing a smile, even a fake smile, can make happy as well. In other words, smiling can trick our brain into believing to be happy which can then spur actual feelings of happiness.

With this introduction, it is clear that smiling more improves happiness, which in turn has multiple positive effects. However, in today's world, people are extremely busy with many smaller or bigger tasks, and constantly under stress from different sources. Therefore, it becomes difficult to remember smiling, same ways as many other good habits can not be adopted.

This enables the user to adopt smiling as a habit. Once smiling becomes a habit, it tricks the brain to have happiness as a habit as well.

It is a general concept to use artificial intelligence technology to a detect smile and/or a no-smile on a user's face, and to provide a feedback in case of low and/or rare smiling occasions over a predetermined period of time.

In an embodiment of the invention, at least one camera is observing the face of a user and captures continuously images of the face. An artificial intelligence unit is then used to detect a smile and/or a no-smile on the face. A counter counts the number of frames with a smile detected over a predetermined, preferably an adjustable and/or predetermined, period of time. In case the counts are less than the threshold, a feedback is given to the user. The feedback can be in the form of visual feedback, preferably a cute and pleasant feedback, on a screen, and/or an audio feedback, preferably a pleasant audio feedback. Receiving such feedbacks over time can trigger the user to adopt the habit of smiling over time, leading to an increase of the happiness level of the user.

The technical field of the present invention is artificial intelligence and smile detection technologies. Smile detection is a very mature technical field, however, its use in the context of a neuro-feedback has not been fully exploited before. It is noted that there is plenty of research and technical work done in the direction of detecting emotions and particularly smiling and its quality.

https://www.cnet.com/news/smile-at-work-or-the-happiness-detector-will-ding-you/ proposes a system that verifies quality of a smile and provides a feedback.

https://blog.affectiva.com/sdk-on-the-spot-emotion-enabled-app-promotes-more-smiling presents an App that "reminds" a user on a "regular" basis to smile. However, such a regular reminder mechanism can have usability issues resulting in too many notifications for the user.

It is therefore an object of the invention to provide a method and system to provide audio and/or visual feedback based on a face expression. This object is achieved by the subject-matter of the attached independent claims. The dependent claims relate to other aspects of the invention.

According to the invention there is provided a method for detecting a smile and providing a feedback to a user, the method comprises the steps of:
a) capturing an image of the user with at least two different sensors over a predetermined period of time;
b) detecting a face in the captured images and marking a contour for the area of the image that belongs to a face;
c) labeling based on two outputs of a convolutional neural network, CNN, the captured images of a face based on a facial expression of the user, wherein the CNN generates two outputs: a probability value for a smile and a probability value for a no-smile; and
d) outputting a feedback to the user based on a predetermined threshold for the label and the predetermined time.

According to an aspect of the invention, one of the sensors is at least one infrared camera and the other is at least one RGB camera;

According to an aspect of the invention, the method further comprises a step of merging the image data from both sensors into a 4-dimensional image. The infrared date is used to create a face mask for detecting a face.

According to an aspect of the invention, the two CNN outputs are converted into a one-hot label indicating smile-no smile.

According to an aspect of the invention, the values of each CNN output are used independently for labeling.

According to an aspect of the invention, a moving average filter is employed on at least one output of the CNN

According to the invention, there is provided a method for training a convolutional neural network, CNN, for use in a method according to any one of the preceding aspects, wherein labeled training data includes smiling and non-smiling faces.

According to an aspect of the invention, distorted images are added to the labeled training data.

According to the invention, there is provided a system for detecting a smile and providing a feedback to a user comprising:
A) at least two sensors each configured to capture an image of a user;
B) a face detection unit configured to detect a face in the captured images and to mark a contour for the area of the image that belongs to the face;
C) a labeling unit configured to label, based on the output of a convolutional neural network, CNN, the captured images of a face based on a facial expression of the user, wherein the CNN generates two outputs: a probability value for a smile and a probability value for a non-smile; and
D) a feedback output unit configured to provide stimulating feedback to the user based on a predetermined threshold for at least one of the labels;

According to an aspect of the invention, at least one of the sensors is an infrared camera and at least one is a RGB camera.

According to an aspect of the invention, the simulating feedback is a visual or audio feedback.

According to an aspect of the invention, the sensors are integrated user facing image sensors of a user device and the feedback unit is an integrated display unit and/or an integrated audio unit of the user device.

According to an aspect of the invention, the system is provided in a single housing and configured to be attached to an object facing a user, preferably a mirror, a laptop-computer, or a desktop.

According to the invention, there is provided a computer program comprising instructions which, when the program is executed by a computer, cause the computer to carry out the steps of the method according to any one of the preceding aspects by using integrated user facing image senores of the computer as sensor and a integrated display unit and/or an integrated audio unit of the user device for feedback.

According to the invention, there is provided computer program comprising instructions which, when the program is executed by a computer, cause the computer to carry out the steps of the method according to any one of the preceding aspects to train a CNN

### Brief description of the drawings

The objects, advantages, and features of the present invention, as well as others, will be more readily understood from the following detailed description of certain preferred embodiments of the invention, when considered in conjunction with the accompanying drawings in which:
Fig. 1 shows a neuro-feedback loop with a system and method according to an embodiment of the invention;
Fig. 2 shows the feedback channels according to an embodiment of the invention; and
Fig. 3 shows the smile detection process according to an embodiment of the invention.

### Detailed description of the drawings

It is a general concept of the invention to remind a user only in case of lack of smiling and to provide a report to the user on the progress towards smiling.

In an embodiment of the invention, the system constantly monitors the smiling duration via at least two sensors and provides a frequent feedback during the day in order to strengthen the neuro-feedback effect of smiling and happiness. In an embodiment of the invention, the system comprises an application that monitors the smile and/or no-smile level of a user using an embedded camera of a laptop, and provides necessary feedback via the laptop's screen. In an alternative or additional embodiment, the system is comprised in a stand alone hardware which is attachable to objects facing the user, e.g. a mirror, laptop, desktop, etc.

In an embodiment of the invention, the system has at least two input channels as well two output channels. The system comprises as input at least one RGB camera and at least one infrared camera. The system comprises a visual feedback output and an audio feedback output.

In an embodiment of the invention, the at least one infrared camera captures additional details on facial patterns especially related to heat and temperature points. This information is used as an auxiliary input to the artificial intelligence unit for detecting smiles.

The regular camera as well as infrared camera provide bitmap images. In an embodiment of the invention, in order to capture the smile pattern, first the area of a face in the image is detected and isolated. The face area is detected using the infrared camera image based on the fact that the body of the person in front of the camera emits more heat than background objects. This is achieved by filtering the data from the infrared camera using a predetermined threshold.

In an embodiment of the invention, the face detection step marks a contour for the area of the image that belongs to the face. In this way, a face mask is created which indicates that the information outside of the face mask is irrelevant for a subsequent smile detection. For smile detection, information from both cameras is merged and presented to a convolutional neural network, CNN. In a preferred embodiment, the CNN is trained with smiling and non-smiling face patterns. The CNN provides two labels a output: probability of a smile and probability of a no-smile.

In an embodiment of the invention the image information from the at least one regular camera is converted to an RGB image. Information from the infrared camera is converted to an intensity image. The intensity image is merged with the RGB image forming a 4-dimensional image.

The CNN provides two outputs that can be converted into a one-hot label indicating smile-no smile. Another alternative is to use/interpret the values of each CNN output individually. Each CNN output provides a probability of smile/no-smile. Since it is a probability, it can be used in order to detect the "level" of smile, i.e. how big the smile is.

In an embodiment of the invention, the outputs of the CNN is generated one for each video frame. Due to several noise factors, e.g. light changes, some frames may by identified wrongly, creating a noisy and oscillating smile detection outputs. In order to avoid noisy outputs, a moving average filter is used at the outputs of the CNN. In this way, only a smile/no-smile detection with majority of frames within the moving average filter is reported which reduces the effect of noise.

As visual feedback output an appealing picture out of a set of selected pictures can be shown to the user. For instance, the user may pre-select a set of appealing or memorial pictures and store them in a pre-designated location.

An additional or alternative form of feedback is providing aggregated statistics on the mood and happiness of the user on weekly or monthly basis. One measure of statistics is the average smiling time in a predetermined time interval, preferably selected from of a few minutes, one week, or one month.

As audio feedback output a music, out of selected play list of the user, a random funny joke, or an inspirational quote, is played to the user. The random joke or the inspirational quote is preferably fetched automatically by the system from the internet.

The audio feedback output may be combined with the visual feedback output as mentioned above.

In an embodiment of the invention, labeled data including smiling and non-smiling faces is used in order to train the CNN. Preferably distorted images are added to the database in order to improve generalization ability of the CNN. All training images should pass through the face detection and applying the face mask as described before.

In an embodiment of the invention to train the system there are two options:
A) Collecting an own database of smiles. In this case, several users are recorded while smiling and while not smiling, with both RGB and infrared cameras. The artificial intelligence unit, preferably a CNN-type artificial intelligence unit, is then fed with those images and corresponding labels for the training process.
B) Use existing smile databases. There are plenty of smile databases available online. They can be used for training the artificial intelligence unit, preferably a CNN. However, those databases are usually recorded only using a RGB camera. The disadvantage in this training option is, that only RGB camera-based images can be used for the system, which provides less evidence for smile detection to the system.

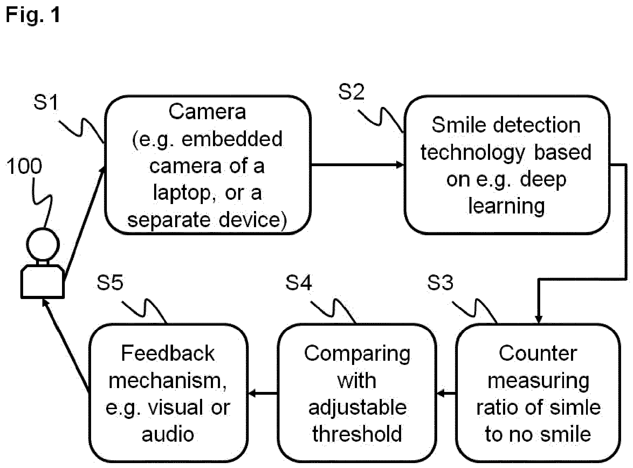

Fig. 1 shows a neuro-feedback loop with a system and method according to an embodiment of the invention. A face expression of a user 100 is recorded by at least two cameras in step S1. Based the recorded images a smile detection is preformed using artificial intelligence in step S2. The artificial intelligence is preferably a CNN or a deep learning method. The detected smiles/no-smiles are counted in step S3 and compared to a threshold, preferably an adjustable threshold, in step S4. A feedback is output to the user 100 in step S5. The user reacts to the feedback and the loop starts again with step S1.

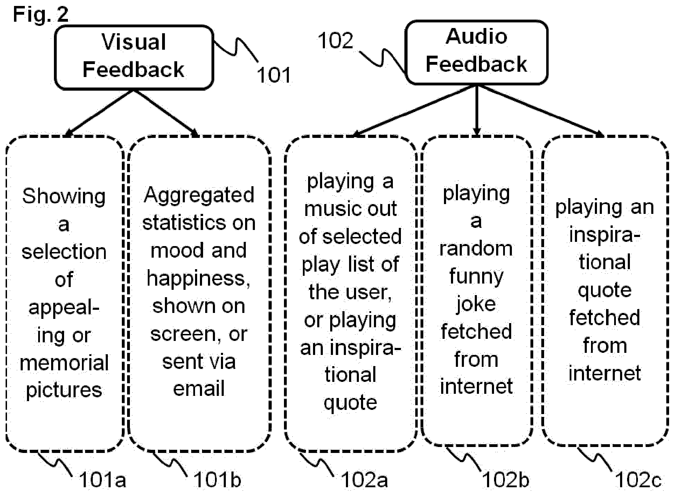

Fig. 2 shows the feedback channels according to an embodiment of the invention. The feedback comprises a visual channel 101 and/or an audio channel 102. The visual feedback 101 comprises presenting a selection of appealing or memorial pictures 101a via a display to the user 100. The visual feedback additionally or alternatively comprises to prepare aggregated statistics on the mood and happiness of the user 100 and to present the statistics 101b to the user 100 via a display and or a message, preferably email.

The audio feedback comprises playing music 102a to the user 100 via a speaker. Preferably playing music out of a selected playlist of the user or playing an inspirational quote. Additionally or alternatively, the audio feedback comprises to play a random joke 102b to the user 100 via a speaker. Additionally or alternatively, the audio feedback comprises playing a inspirational quote or a joke to the user, wherein the quote or joke is fetched from the internet 102c.

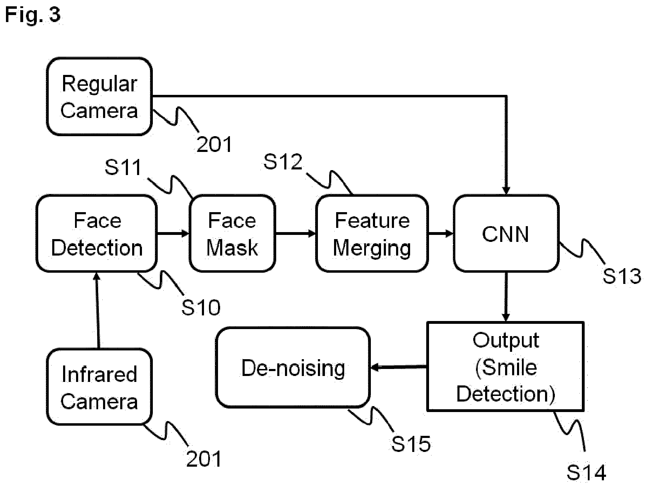

Fig. 3 shows the smile detection process according to an embodiment of the invention. Images are captured by at least one regular camera 201 and at least one infrared camera 202. The infrared data is used in a face detection step S10 in a face detection unit. The output of the step S10 and of the face detection unit is a face mask S11. This face mask is used in a feature merging step S12 which combines the information of the regular camera image and the infrared image. The merged image is then processed in an artificial intelligence unit in step S13. The outputs of the artificial intelligence unit is a smile and a no smile detection S14 for a face in within the area of the face mask S11. In a preferred embodiment, the output S14 is then de-noised in step S15, preferably using a moving average technique.

By way of an example, the effect of the invention is described as follows: John has been very busy recently with his professional and personal life. He goes to work every working day and sometimes several days pass with no fun or even a bit of smile. His colleagues in the office are pretty much the same.

He sees accidently an advertisement about a device that monitors smile and happiness and helps in elevating the mood by getting intelligent reminders. John buys the device and clips it to his screen at work.

The device has two cameras, and RGB and an infra-red camera. The device detectss John's face and registers the durations when he is smiling or happy. The devices triggers then some regular reports to John via email, presenting statistics on how smiling or how happy John has been.

The device also sometimes plays an inspirational quote for John, especially when he has not been smiling for a long time. The device gradually reminds John how important happiness and smiling is. He remembers to smile more often. Once he smiles, he gets more of happiness hormones and he smiles even more.

What has been described and illustrated herein are embodiments of the invention along with some of variations. The terms, descriptions and figures used herein are set forth by way of illustration only and are not meant as limitations. Those skilled in the art will recognize that many variations are possible within the spirit and scope of the invention, which is intended to be defined by the following claims-and their equivalents-in which all terms are meant in their broadest reasonable sense unless otherwise indicated.

## Claims

1. A method for detecting a smile and providing a feedback to a user, the method comprises the steps of:
a) capturing an image of the user with at least two different sensors over a predetermined period of time;
b) detecting a face in the captured images and marking a contour for the area of the image that belongs to the face;
c) labeling based on an output of a convolutional neural network, CNN, the captured images of a face based on a facial expression of the user, wherein the CNN generates two outputs: a probability value for a smile and a probability value for a no-smile; and
d) outputting a feedback to the user based on a predetermined threshold for the label and the predetermined time.

2. Method according to claim 1, wherein one of the sensors is at least one infrared camera a the other is at least one RGB camera;

3. The method according to claim 1 or 2, further comprises a step of merging the image data from both sensors into a 4-dimensional image; and
wherein the infrared data is used to create a face mask for detecting a face.

4. The method according to any one of claims 1 to 3, wherein the two CNN outputs are converted into a one-hot label indicating smile-no smile.

5. The method according to any one of claims 1 to 3, wherein the values of each CNN output are independently used for labeling.

6. The method according to any one of claims 1 to 4, wherein a moving average filter is employed at the output of the CNN

7. A method for training a convolutional neural network, CNN, for use in a method according to any one of claims 1 to 6, wherein labeled training data includes smiling and non-smiling faces.

8. The method according to claim 7, wherein distorted images are added to the labeled training data.

9. System for detecting a smile and providing a feedback to a user comprising:
A) at least two sensors each configured to capture an image of a user;
B) a face detection unit configured to detect a face in the captured images and to mark a contour for the area of the image that belongs to the face;
C) a labeling unit configured to label, based on a output of a convolutional neural network, CNN, the captured images of a face based on an facial expression of the user, wherein the CNN generates two outputs: a probability value for a smile and a probability value for a non-smile; and
D) a feedback output unit configured to provide stimulating feedback to the user based on a predetermined threshold for at least one of the labels;

10. The system according to claim 9, wherein at least one of the sensors is an infrared camera and at least one is a RGB camera.

11. The system according to claim 9 or 10, wherein the feedback is a visual or audio feedback.

12. The system according to any one of claims 9 to 11, wherein the sensors are integrated user facing image senores of a user device and the feedback unit is an integrated display unit and/or an integrated audio unit of the user device.

13. The system according to any one of claims 9 to 11, wherein the system is provided in a single housing and configured to be attached to an object facing a user, preferably a mirror, a laptop-computer, or a desktop.

14. A computer program comprising instructions which, when the program is executed by a computer, cause the computer to carry out the steps of the method according to any one of claims 1 to 6 by using integrated user facing image senores of the computer as sensor and a integrated display unit and/or an integrated audio unit of the user device for feedback.

15. A computer program comprising instructions which, when the program is executed by a computer, cause the computer to carry out the steps of the method according to claims 7 or 8.
